# EUROPÄISCHE PATENTSCHRIFT

(11) **EP 1 363 041 B1**
(45) Veröffentlichungstag und Bekanntmachung des Hinweises auf die Patenterteilung: **09.02.2005**
(21) Anmeldenummer: 03007235.9
(22) Anmeldetag: 01.04.2003
(51) Int. Cl.: F16F 1/04

(54) **Zugfeder mit angeformter Öse**
Tension spring with integrally formed eye
Ressort à tension avec un oeillet intégré

(30) Priorität: 14.05.2002 DE 10221313
(43) Veröffentlichungstag der Anmeldung: 19.11.2003
(73) Patentinhaber: Federntechnik Knörzer GmbH, 72793 Pfullingen (DE)
(72) Erfinder: Knörzer, Thomas, 72805 Lichtenstein (DE)
(74) Vertreter: Ott, Elmar ,Dipl.-Ing.

(56) Entgegenhaltungen:
- EP-A- 0 377 934
- DE-U- 20 107 669
- US-A- 2 998 242
- US-A- 4 735 403
- PATENT ABSTRACTS OF JAPAN vol. 009, no. 055 (M-362), 9. März 1985 (1985-03-09) & JP 59 190528 A (MITSUBISHI JIDOSHA KOGYO KK), 29. Oktober 1984 (1984-10-29)
- PATENT ABSTRACTS OF JAPAN vol. 009, no. 073 (M-368), 3. April 1985 (1985-04-03) & JP 59 205034 A (MURATA HATSUJIYOU KK), 20. November 1984 (1984-11-20)
- PATENT ABSTRACTS OF JAPAN vol. 010, no. 114 (M-473), 26. April 1986 (1986-04-26) & JP 60 241535 A (SANKOU SENZAI KOGYO KK), 30. November 1985 (1985-11-30)

## Beschreibung

Die Erfindung betrifft eine Zugfeder mit angeformter Öse und mit einem Federkörper aus schraubenförmig gewickeltem Federdraht.

Zugfedem aus Federstahl werden für die unterschiedlichsten Anwendungen eingesetzt. Dabei werden Zugfedern meist in der Weise angeordnet, dass sie zwischen zwei Spannungswerten Wechsellasten ausgesetzt sind, d. h. dass auf die beiden an den Enden des Federkörpers abstehenden Ösen ständig eine Zugkraft mit vorzugsweise unterschiedlicher Stärke angreift. Der in etwa rechtwinklig abgebogene Übergangsbereich zwischen Öse und der ersten bzw. letzten Windung des Federkörpers ist dabei einer hohen Beanspruchung ausgesetzt, weshalb bei herkömmlichen Zugfedern regelmäßig dieser Übergangsbereich aufgrund von Materialermüdung oder Überbelastung zuerst bricht. Außerdem besitzen Schraubenfedem aus Runddraht auch einen nicht optimalen Spannungsverlauf im Bereich des Federkörpers.

Aus der US-PS 4 735 403 ist nun eine Druckfeder bekannt, die einen Federdraht mit eiförmigem Querschnitt hat. Dort ist auch ein sich verjüngender Ovalquerschnitt in der Zeichnung dargestellt, jedoch ist diese Variante in der Beschreibung nicht beschrieben. Insbesondere kann dieser Druckschrift kein Lösungsansatz entnommen werden, wie der Übergangsbereich vom Federkörper zu der Öse einer Zugfeder stabiler ausgebildet werden könnte, um dort Ermüdungsbrüche zu vermeiden.

Die Erfindung geht aus von der DE 201 07 669 U1, die eine Zugfeder mit angeformter Öse zeigt, deren Federdraht einen ovalen Querschnitt hat. Mit einem derartigen ovalen Querschnitt erhält man jedoch für Zugfedern keine optimale Spannungsverteilung im zugbelasteten Federdraht.

Der Erfindung liegt die Aufgabe zugrunde, eine Zugfeder mit angeformter Öse aus schraubenförmig gewickeltem Federdraht zu schaffen, die bei möglichst geringem Materialbedarf eine hohe Belastbarkeit und eine optimierte Spannungsvereilung im Federdraht bei Zugbelastung besitzt.

Die Lösung dieser Aufgabe erhält man durch die im Anspruch 1 angegebenen Merkmale. Es wird ein sich verjüngender ovaler Querschnitt für den Federdraht verwendet, wobei der Federdraht über den gesamten Federkern und auch im Bereich der Öse über seine große Querschnittsachse a gewickelt ist. Somit liegen die Windungen mit ihren breiteren Seiten aneinander, während entlang der halbkreisförmig ausgebildeten und in Längsrichtung des Federkörpers abstehenden Öse die kurze Querschnittsachse b senkrecht zur Längsachse der Zugfeder ausgerichtet ist. Am Federkörper verläuft die große Querschnittsachse a quer bzw. weitgehend senkrecht zur Längsachse der Zugfeder. Aufgrund der Steigung der Windungen weicht die große Querschnittsachse a im Bereich des Federkörpers geringfügig vom rechten Winkel im Bezug auf die Längsachse des Federkörpers ab.

Um eine Zugfeder, bei der ein sich einseitig verjüngender Federdrahtquerschnitt Verwendung findet, mit einer maximalen Stabilität auszubilden, kann der große, äußere Querschnittsradius R 1 zum kleinen, inneren Querschnittsradius R2 des sich verjüngenden Ovalquerschnitts ein Verhältnis von etwa R1:R2 = 1,085 haben. Das Verhältnis von großem Querschnittsradius R1 zur großen Querschnittsachse a des Federdrahts liegt dabei im Bereich zwischen 2,9 bis 3,3, vorzugsweise bei 3,12 mit einer Toleranz von 1%.

Besonders vorteilhaft ist es somit, wenn bei einer Querschnittsbreite a des Federdrahts zwischen 2 mm und 10 mm diese etwa um den Faktor 3,12 größer ist als der große Querschnittsradius R1, so dass der große Querschnittsradius R1 dann in einem Bereich zwischen 0,64 mm und 3,2 mm liegt. Für die kurze Querschnittsachse b gilt dabei b = 2R1.

Es wurde eine Vielzahl von sehr erfolgreichen Dauerbelastungsversuchen mit Zugfedern durchgeführt. Vier der verwendeten Federn hatten beispielsweise einen Federdraht mit folgende Querschnittsabmessungen (in Millimeter):
Feder 1: R1 = 0,65 R2 = 0,60 a = 2,05
Feder 2: R1 = 0,85 R2 = 0,78 a = 2,65
Feder 3: R1 = 1,05 R2 = 0,96 a = 3,30
Feder 4: R1 = 2,65 R2 = 2,44 a = 8,30

Zugfedern mit den erfindungsgemäßen Abmessungen und dem konischen Ovalprofil sind für sehr hohe dynamische Beanspruchungen optimal geeignet und sind für Anwendungen mit einer Lastspielzahl von über 100.000 einsetzbar. Diese neuartigen Zugfedern zeichnen sich aus durch hohe Federkraft und großen Federweg sowie dynamische Haltbarkeit an den zugbelasteten Ösen. Durch diese vorteilhaften Merkmale der erfindungsgemäßen Zugfedern sind die Zugfedern sehr universell einsetzbar.

Aus Gründen einer möglichst einfachen Herstellung ist die Zugfeder vorzugsweise aus einem Federdraht gefertigt, dessen konisch sich verjüngender Querschnitt über seine gesamte Länge konstant ist. Grundsätzlich besteht aber auch die Möglichkeit, den Federdraht im Bereich des Federkörpers mit einem größeren oder kleineren Achsenverhältnis a:b auszubilden, als im Bereich einer angeformten Öse.

Der Federdraht wird vorzugsweise aus einem Draht mit rundem Querschnitt zu einem Federdraht mit sich verjüngendem Ovalquerschnitt verformt. Die Verformung kann durch Walzen oder im Drahtziehverfahren erfolgen.

Die Erfindung wird nachfolgend anhand von in der Zeichnung dargestellten Ausführungsbeispielen näher erläutert.

Es zeigen:
Figur 1 eine an sich bekannte Zugfeder mit ovalem Federdraht,
Figur 2 eine erfindungsgemäße Zugfeder, deren Federdraht einen sich nach innen zur Längsachse verjüngenden Ovalquerschnitt hat, und
Figur 3 eine vergrößerte Querschnittsdarstellung.

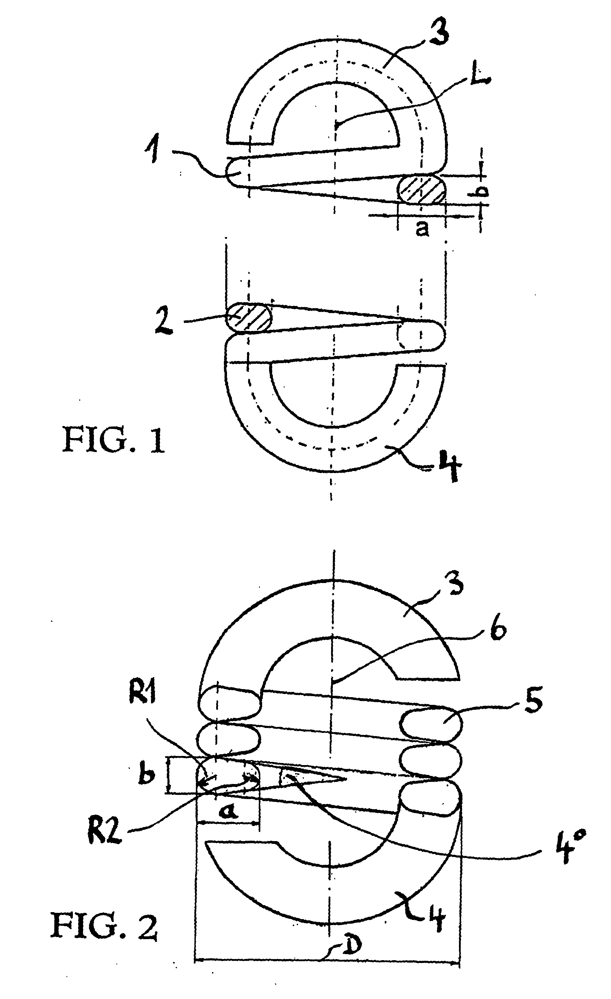

Die in Figur 1 dargestellte Zugfeder 1 hat einen Federkörper aus schraubenförmig gewickeltem Federdraht 2, der an seinen beiden Enden in angeformte Ösen 3, 4 übergeht. Die Ösen 3, 4 bilden einen in etwa halbkreisförmigen Ringbogen. Der verwendete Federdraht 2 hat über seine gesamte Länge einen einheitlichen, ovalen Querschnitt. Die kleine Achse b der Querschnittsfläche ist im Bereich des Federkörpers in Längsrichtung der Zugfeder 1 ausgerichtet, während sie im Bereich der Ösen 3, 4 senkrecht zur Längsachse L der Zugfeder 1 verläuft.

Bei der in Figur 2 dargestellten Ansicht einer erfindungsgemäßen Zugfeder 1 ist die sich nach innen verjüngende Querschnittsfläche 5 des Federdrahts 2 erkennbar. Die beiden Ösen 3, 4 sind ebenso wie die Windungen im Bereich des Federkörpers hochkant gebogen bzw. gewickelt, so dass die große Querschnittsachse a am Scheitelpunkt der Ösen 3, 4 koaxial zur Längsachse 6 der Zugfeder 1 ausgerichtet ist.

Untersuchungen haben gezeigt, dass mit einem Federdraht, der einen sich verjüngenden Ovalquerschnitt hat, Zugfedern realisierbar sind, die mit verhältnismäßig geringem Materialaufwand besonders hohen Belastungen standhalten. Durch den speziellen Drahtquerschnitt kann die Stabilität im Bereich der Ösen und im Federkörper bei Zugfedern deutlich verbessert werden.

Für die erfindungsgemäße Zugfeder liegt der Durchmesser D des Federkörpers vorzugsweise im Bereich 5a < D < 8a.

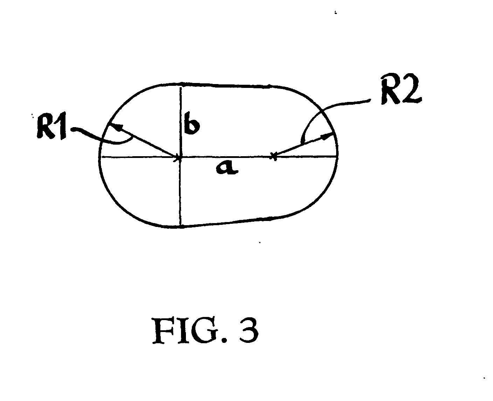

In der vergrößerten Querschnittsdarstellung von Figur 3 sind die Radien R1 und R2 sowie die Längs- und Querachsen a und b deutlicher ersichtlich. Die kurze Querschnittsachse b entspricht dabei b = 2R1.

## Patentansprüche

1. Zugfeder mit angeformter Öse (3, 4) und mit einem Federkörper aus schraubenförmig gewickeltem Federdraht (2) bei dem die kleine Querschnittsachse (b) des Federkörpers an der Öse (3, 4) über den gesamten Ösenradius senkrecht zur Längsachse (6) des Federkörpers ausgerichtet ist, **dadurch gekennzeichnet, dass** der Querschnitt (5) des Federdrahts (2) ein sich konisch nach innen zur Längsachse (L) der Zugfeder (1) verjüngendes Oval bildet, wobei der große, äußere Querschnittsradius (R1) zum kleinen inneren Querschnittsradius (R2) des sich verjüngenden Ovals ein Verhältnis R1 zu R2 hat, welches der Bedingung 1,08 < R1:R2 < 1,095 genügt und dessen Verhältnis von großem Querschnittsradius (R1) zur großen Querschnittsachse (a) des Federdrahts (2) im Bereich zwischen 2,9 bis 3,3 liegt.

2. Zugfeder nach Anspruch 1, **dadurch gekennzeichnet, dass** die Querschnittsbreite (a) des Federdrahts (2) zwischen 2 mm und 10 mm liegt und etwa um den Faktor 3,12 größer ist als der große Querschnittsradius (R1), so dass der große Querschnittsradius (R1) in einem Bereich zwischen 0,64 mm und 3,2 mm liegt.

3. Zugfeder nach Anspruch 1, **dadurch gekennzeichnet, dass** das Verhältnis von großer Querschnittsachse (a) zu großem Querschnittsradius (R1) dem Wert 3,12 mit einem Toleranzbereich von 1% entspricht.

4. Zugfeder nach einem der vorhergehenden Ansprüche, **dadurch gekennzeichnet, dass** der Federdraht (2) aus einem Runddraht zu einem Federdraht mit konisch verjüngtem Ovalquerschnitt durch Verformung hergestellt ist.

5. Zugfeder nach einem der vorhergehenden Ansprüche, **dadurch gekennzeichnet, dass** der Federdraht (2) aus einem Runddraht im Drahtziehverfahren verformt ist.

6. Zugfeder nach einem der vorhergehenden Ansprüche, **dadurch gekennzeichnet, dass** der Durchmesser D des Federkörpers vorzugsweise im Bereich 5a < D < 8a liegt.

## Claims

1. Tension spring having integrally formed eye (3, 4) and having a spring body produced from spring wire (2) wound in a helical manner, where the small cross-sectional axis (b) of the spring body at the eye (3, 4) is orientated at right angles to the longitudinal axis (6) of the spring body over the entire radius of the eye, **characterised in that** the cross-section (5) of the spring wire (2) forms an oval, which tapers conically inwardly towards the longitudinal axis (L) of the tension spring (1), wherein the ratio R1 to R2 between the large, outer cross-sectional radius (R1) and the small, inner cross-sectional radius (R2) of the tapering oval satisfies the condition 1.08 < R1:R2 < 1.095 and the ratio between the large cross-sectional radius (R1) and the large cross-sectional axis (a) of the spring wire (2) is in the range between 2.9 and 3.3.

2. Tension spring according to claim 1, **characterised in that** the cross-sectional width (a) of the spring wire (2) is between 2 mm and 10 mm and is larger than the large cross-sectional radius (R1) approximately by the factor 3.12, such that the large cross-sectional radius (R1) is in a range between 0.64 mm and 3.2 mm.

3. Tension spring according to claim 1, **characterised in that** the ratio between large cross-section axis (a) and large cross-sectional radius (R1) corresponds to the value 3.12 with a tolerance range of 1%.

4. Tension spring according to one of the preceding claims, **characterised in that** the spring wire (2) is produced from a round wire by means of deforming to form a spring wire with a conically tapered oval cross-section.

5. Tension spring according to one of the preceding claims, **characterised in that** the spring wire (2) is deformed from a round wire in a wire drawing method.

6. Tension spring according to one of the preceding claims, **characterised in that** the diameter D of the spring body is preferably in the range 5a < D < 8a.

## Revendications

1. Ressort de traction avec oeillet (3, 4) intégré et avec un corps de ressort en fil d'acier pour ressort (2) enroulé de manière hélicoïdale, dans lequel le petit axe de section transversale (b) du corps de ressort sur l'oeillet (3, 4) est orienté sur l'ensemble du rayon de l'oeillet perpendiculairement à l'axe longitudinal (6) du corps de ressort, **caractérisé en ce que** la section transversale (5) du fil d'acier pour ressort (2) forme un ovale se rétrécissant de manière conique vers l'intérieur par rapport à l'axe longitudinal (L) du ressort de traction (1), le grand rayon de section transversale extérieur, (R1), présentant par rapport au petit rayon de section transversale intérieur (R2) de l'ovale se rétrécissant un rapport de R1 par rapport à R2, lequel satisfait la condition 1,08<R1:R2<1,095 et dont le rapport du grand rayon de section transversale (R1) par rapport au grand axe de section transversale (a) du fil d'acier pour ressort (2) se situe dans la zone comprise entre 2,9 et 3,3.

2. Ressort de traction selon la revendication 1, **caractérisé en ce que** la largeur de section transversale (a) du fil d'acier pour ressort (2) se situe entre 2 mm et 10 mm et est environ supérieur du facteur 3,12 au grand rayon de section transversale (R1), de sorte que le grand rayon de section transversale (R1) se situe dans une zone comprise entre 0,64 mm et 3,2 mm.

3. Ressort de traction selon la revendication 1, **caractérisé en ce que** le rapport du grand axe de section transversale (a) par rapport au grand rayon de section transversale (R1) correspond à la valeur 3,12 avec une zone de tolérance de 1 %.

4. Ressort de traction selon l'une des revendications précédentes, **caractérisé en ce que** le fil d'acier pour ressort (2) est fabriqué par façonnage à partir d'un fil de section circulaire pour obtenir un fil d'acier pour ressort, présentant une section transversale ovale se rétrécissant de manière conique.

5. Ressort de traction selon l'une des revendications précédentes, **caractérisé en ce que** le fil d'acier pour ressort (2) est façonné à partir d'un fil de section circulaire au cours du procédé de tréfilage.

6. Ressort de traction selon l'une des revendications précédentes, **caractérisé en ce que** le diamètre D du corps de ressort se situe de préférence dans la zone 5a<D<8a.
